# EUROPEAN PATENT SPECIFICATION

(11) **EP 2 140 514 B1**
(45) Date of publication and mention of the grant of the patent: **11.12.2019**
(21) Application number: 08719820.6
(22) Date of filing: 25.03.2008
(51) Int. Cl.: H01M 10/36, H01M 4/02

(54) **LITHIUM SECONDARY BATTERIES**
LITHIUM-SEKUNDÄRBATTERIEN
BATTERIES SECONDAIRES AU LITHIUM

(30) Priority: 26.03.2007 US 919970 P
(43) Date of publication of application: 06.01.2010
(73) Proprietor: Duracell U.S. Operations, Inc., Wilmington, DE 19801 (US)
(72) Inventor: LOTH-KRAUSSER, Harmut, 64589 Stockstadt Am Rhein (DE); KRESSMAN, Frank, 65760 Eschborn (DE); CINTRA, George, M., Holliston, Massachusetts 01746 (US); KAPLAN, Alexander, Providence, Rhode Island 02906 (US); STONE, Matthew, R., Oxford 01540, Massachusetts (US); NANJUNDASWAMY, Kirakodu, S., Sharon, Massachusetts 02067 (US); HOLMAN, Richard, K., Watertown, MA02472 (US)
(74) Representative: Hoyng Rokh Monegier LLP
(86) International application number: PCT/IB2008/051103
(87) International publication number: WO 2008/117236

(56) References cited:
- WO-A-2005/076936
- WO-A-2006/019148
- WO-A-2006/124738
- JP-A- 2006 086 116
- XIA ET AL: "Improved electrochemical performance of LiFePO4 by increasing its specific surface area" ELECTROCHIMICA ACTA, ELSEVIER SCIENCE PUBLISHERS, BARKING, GB, vol. 52, no. 1, 16 September 2006 (2006-09-16), pages 240-245, XP005900786 ISSN: 0013-4686

## Description

### TECHNICAL FIELD

The invention relates to batteries, as well as to related components and methods.

### BACKGROUND

Batteries, or electrochemical cells, such as primary alkaline batteries or secondary lithium batteries, are commonly used electrical energy sources. A battery contains a negative electrode, typically called the anode, and a positive electrode, typically called the cathode. The anode contains an active material that can be oxidized; the cathode contains or consumes an active material that can be reduced. The anode active material is capable of reducing the cathode active material. In order to prevent direct reaction of the anode material and the cathode material, the anode and the cathode are electrically isolated from each other by a separator.

When a battery is used as an electrical energy source in a device, electrical contact is made between the anode and the cathode, allowing electrons to flow through the device and permitting the respective oxidation and reduction reactions to occur to provide electrical power. An electrolyte in contact with the anode and the cathode contains ions that flow through the separator between the electrodes to maintain charge balance throughout the battery during discharge.

Rechargeable batteries, also known as secondary batteries, contain active materials that are regenerated by charging. When the energy produced by these batteries drops below optimum efficiency, they can be recharged in any one of many manners, depending upon their construction. Rechargeable batteries are broken down into two main classifications based upon the chemical composition of the battery. Both of these classifications, alkaline secondary batteries and lithium secondary batteries, contain a wide assortment of battery styles.

Presently some lithium ion cells for many consumer electronics applications can be fully recharged in 1 hour. More recently, high power lithium ion cells available for power tool applications have come on the market which claim 15-30 minute charge times. However, faster charge times and high power discharge can result in significantly reduced cycle life. There is a need for a small cell which is capable of delivering and/or charging at least 10% of its capacity in 10 seconds time. Such cells can have many applications, for instance in electric shavers and other consumer devices.

The following are representative of the prior art:
WO2005/076936, published August 25th 2005, discloses a high capacity, high charge rate lithium secondary cell.
Xia et al, "Improved electrochemical performance of LiFePO4 by increasing its specific surface area" Electrochemica Acta, 2006, reports that LiFePO₄ with an excellent rate capability has been successfully synthesized by a simple solid-state reaction method. The effects of sintering temperature on specific surface area and electrochemical performance (discharge capacity) are reported.
JP2006086116, WO2006/019148 and WO2006/124738 all relate to lithium-containing cathode active compositions which further comprise a carbon-based conductivity enhancer or a phenothiazine compound.

### SUMMARY

The invention relates to batteries having a fast charge acceptance rate.

The invention provides a battery in accordance with the claims.

The battery has a charge acceptance rate of about 10 percent capacity in about 15 seconds or less (e.g., about 10 percent capacity in about 10 seconds or less); . The battery can have a continuous discharge power density of greater than or equal to 1000 watts per liter (e.g., greater than or equal to 2000 watts per liter, greater than or equal to 3000 watts per liter, greater than or equal to 4000 watts per liter, greater than or equal to 5000 watts per liter), a charge power density greater than or equal to 0.13% capacity/sec/ml (e.g., greater than or equal to 0.20% capacity/sec/ml, or greater than or equal to 0.30% capacity/sec/ml), and/or a cycle life of greater than or equal to 1000 cycles (e.g., greater than or equal to 2000 cycles, or greater than or equal to 3000 cycles). The battery can have an internal resistance of less than 45 mΩ (e.g., from 20 to 50 mΩ, from 20-40 mΩ, from 30 to 50 mΩ, from 30 to 40 mΩ, or from 35-40 mΩ). The battery a primary or a secondary battery.

The cathode, anode, and/or separator can be spirally wound, wound around a blade, stacked, or folded.

The anode can include a carbon-based material, such as a mesocarbon microbead material. The cathode, the anode, and the separator can be spirally wound.

The housing has a volume of less than or equal to 10ml.

The housing can be cylindrical or prismatic.

The method can include winding a cathode current collector coated with a cathode composition, an anode, and/or a separator around a mandrel. The mandrel preferably has a diameter of from one to two millimeters. The method can include winding a cathode current collector coated with a cathode composition, an anode, and/or a separator around a blade. The blade can have a thickness of from 0.3 mm to 1.0 mm. In some embodiments, the blade can have a width of greater than or equal to 20 mm and a thickness of greater than or equal to 0.3 mm. The method can include a cathode current collector coated with a cathode composition, an anode, and/or separator stacked within the housing.

Embodiments may have one or more of the following advantages. The battery can have a fast charge time, a high discharge rate, and a high cycle life. The battery generally can have good safety characteristics, limited gas evolution, good heat dissipation and good high current discharge properties.

The details of one or more embodiments of the invention are set forth in the accompanying drawings and the description below. Other features, objects, and advantages of the invention will be apparent from the description and drawings, and from the claims.

### DESCRIPTION OF DRAWINGS

FIG. 1 is a sectional view of an embodiment of a non-aqueous electrochemical cell.
FIG. 2 is a sectional view of an embodiment of a non-aqueous electrochemical cell.
FIG 3 is a photograph of an embodiment of an assembled cell.
FIG. 4 is a graph depicting the voltage change as a 2/3 AAA battery is charged for 10 seconds at 36C at various states of charge.
FIG. 5 is a graph depicting the discharge profile of a 2/3 AAA battery at various discharge rates.
FIG. 6 is a graph depicting the discharge power density of a 2/3 AAA battery as a function of the number of charge-discharge cycles.
FIG. 7 is a graph depicting the discharge power density of a 2/3 AAA battery as a function of the number of charge-discharge cycles.

### DETAILED DESCRIPTION

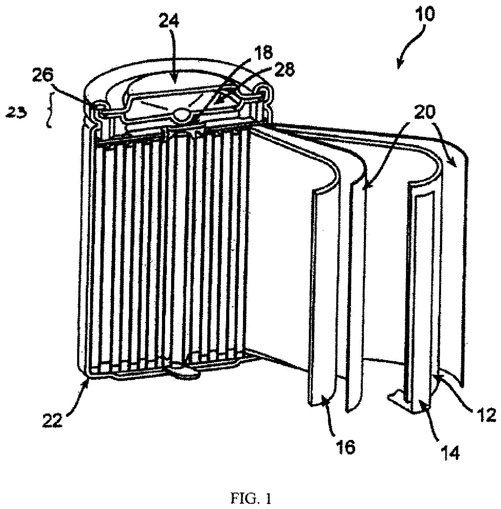

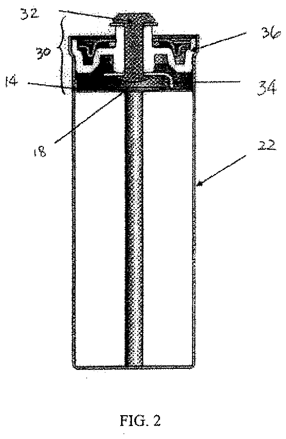

Referring to FIG. 1, a secondary cylindrical electrochemical cell 10 can include an anode 12 in electrical contact with a negative lead 14, a cathode 16 in electrical contact with a positive lead 18, a separator 20, and an electrolyte. Anode 12, cathode 16, separator 20, and the electrolyte are contained within a housing 22. The electrolyte includes one or more solvents and a salt that is at least partially dissolved in the solvent system. Electrochemical cell 10 further includes a top assembly 23, which includes cap 24 and an annular insulating gasket 26, as well as a safety valve 28. In some embodiments, referring to FIG. 2, a battery can include a top assembly 30, which includes an external terminal 32, an internal terminal 34, a plastic seal including a safety vent 36. The top assembly is crimped onto the housing.

The battery can be for a consumer device and has a volume of less than or equal to 10 cc, e.g. less than or equal to 5 cc, less than or equal to 2.3 cc) and/or greater than or equal to 1.5 cc (e.g., greater than or equal to 2.3 cc, greater than or equal to 5 cc).

Battery 10 can have fast charge times, such that the battery can reach greater than or equal to 90% capacity in less than 15 minutes (e.g., greater than or equal to 90% capacity in less than 10 minutes, greater than or equal to 90% capacity in less than 5 minutes, or greater than or equal to 90% capacity in about 1.5 minutes). In some embodiments, the battery can reach greater than or equal to 95% capacity in less than 15 minutes (e.g., greater than or equal to 95% capacity in less than 10 minutes, greater than or equal to 95% capacity in less than 5 minutes, or greater than or equal to 95% capacity in about 1.5 minutes). The charge capacity of a battery is determined by charging a battery with a current and counting ampere-hours until the battery reaches either a pre-determined cut-off voltage or time. An ampere hour is defined as a current value multiplied by an elapsed charge time. The theoretical capacity of the battery is obtained by multiplying the cathode specific capacity (expressed in Ah/g) with the weight of the active cathode material contained in a battery. As an example, for a specific capacity of LiFePO₄ of 0.170 Ah/g and a weight of LiFePO₄ cathode material contained in a 2/3AAA lithium ion cell of 0.588 grams, the theoretical capacity of a 2/3AAA lithium ion cell is 0.1Ah.

The battery can have a high continuous discharge power density over a discharge rate of from 10C to 60C. A continuous constant current discharge occurs when the battery is drained by a constant current to a discharge cut-off voltage (e.g., 2.0V, 3.0 V, or 4.0 V) continuously, without interruption and rest periods. A power density is defined as the continuous discharge current multiplied by the battery voltage, per unit volume of the battery. The continuous discharge power density can be greater than or equal to 1000 watts/L (e.g., greater than or equal to 2000 watts/L, greater than or equal to 3000 watts/L, greater than or equal to 4000 watts/L, greater than or equal to 5000 watts/L) and/or less than or equal to 6000 watts/L (e.g., less than or equal to 5000 watts/L, less than or equal to 4000 watts/L, less than or equal to 3000 watts/L, less than or equal to 2000 watts/L). A high continuous discharge power density can provide a greater amount of power over a time period.

The battery can have a charge-discharge cycle life of greater than or equal to 1000 cycles (e.g., greater than or equal to 1500 cycles, greater than or equal to 2000 cycles, or greater than or equal to 3000 cycles), such that the battery's capacity can decrease by less than or equal to 10% (less than or equal to 20%, less than or equal to 30%, or less than or equal to 40%). Charge-discharge cycle life can be measured by repeatedly charging a battery to full capacity, then discharging to minimum voltage, while monitoring the battery's discharge power density. For example, a 2/3AAA battery having an initial 86 mAh capacity can be cycled by charging for 5 minutes at 12C to 3.8V, followed by a 1C discharge to 2.0 V. The discharge power density can decrease by about 10 % over 1500 cycles. As used herein, a rate of "1C" refers to a time of one hour, a rate of 2C refers to a time of 1/2 hour, and a 1/2C refers to a time of 2 hours (obtained by calculating the inverse of the C coefficient). The C rate is defined as the inverse of time, in hours, necessary to obtain the full capacity of a battery measured at a slow rate (e.g., C/5 or less).

In some embodiments, the battery can be charged to 10 % of the capacity in 10 seconds or less (e.g., 10 % of the capacity in 15 seconds or less) at various states of charge. For example, a 2/3 AAA battery can be charged to 10% of capacity in 10 seconds to 4.0 V cut-off at a 36C (3.6 A) rate. For example, a fully discharged battery (0% state of charge) can be charged such that there is a 10 % increase of the capacity in 10 seconds. In some embodiments, a battery that is 0 % charged (e.g., 10 % charged, 20% charged, 30% charged, 40% charged, 60% charged, 80% charged) can be charged such that there is a 10% increase of the capacity in 10 seconds. Without wishing to be bound by theory, it is believed that the more a battery is fully discharged, the more safely the battery is charged to 10% of its capacity in 10 seconds and the less likely the battery is subject to degradation over a period of time (e.g., 1000 cycles, 2000 cycles, 3000 cycles), which may result from heat buildup as the voltage rises during the charging process. It is believed that the more a battery is initially charged, the greater the resistance to charging and the more likely the battery can degrade a time period (e.g., 1000 cycles, 2000 cycles, 3000 cycles). In some embodiments, battery degradation occurs when the battery's capacity is greater than 50% of the theoretical capacity.

This battery can have a power charge density in %capacity/sec/eeml, which can be calculated by measuring the capacity a battery, and dividing the capacity by the volume of the duration of the charge in seconds, and the volume of the battery in millilitres (ml). The lithium ion cell can have a charge power density greater than 0.13% capacity/sec/ ml (e.g., greater than or equal to 0.20% capacity/sec/ ml, greater than or equal to 0.30% capacity/sec/eeml, greater than or equal to 0.40% capacity/sec/eeml, greater than 0.43% capacity/ sec/ml).

The battery can include thin electrodes (e.g., the cathode and/or the anode). To fill a given volume, a thinner electrode (e.g., cathode or anode) can have an increased surface area. By increasing the electrode surface area, current density is lowered per given area of the cathode, which can lead to lower current impedance and/or allow a cathode to sustain a higher current. For example, the internal impedance of the battery can be from 20 to 50 mΩ (e.g, 20-40 mΩ, 30-50 mΩ, 30-40 mΩ, or 35-40 mΩ). In some embodiments, a thinner electrode can decrease the diffusing path for electrons and/or increase the cycle life of the battery.

Cathode 16 includes a cathode current collector and a cathode material that is coated on at least one side of the cathode current collector. The cathode has a thickness of less than or equal to 120 µm (e.g., less than or equal to 100 µm, less than or equal to 90 µm, less than or equal to 80 µm, less than or equal to 60 µm, less than or equal to 30 µm) and greater than or equal to 15 µm (e.g., greater than or equal to 30 µm, greater than or equal to 60 µm, greater than or equal to 80 µm, greater than or equal to 90 µm, greater than or equal to 100 µm). The cathode thickness can be reduced by using thin coatings of the cathode material and/or a thin current collector. The cathode material includes the cathode active material(s) and can also include one or more conductive materials (e.g., conductive aids, charge control agents) and/or one or more binders.

The cathode active material includes a lithium transition metal phosphate material. The lithium transition metal can be doped with a metal, metalloid, or halogen. The active material can have a formula such as LiMPO₄, where M is one or more of V, Cr, Mn, Fe, Co, and Ni, and the compound is optionally doped at the Li, M, or O sites. A doped compound can have the formula (Li₁₋ₓZₓ)MPO₄, where Z is Zr, Ti, or Nb. In some embodiments, the lithium transition metal phosphate is LiFePO₄. The LiFePO₄ can have a small size, which can improve transport properties. The active material can include powders or particulates with a specific area of greater than 10 m²/g, greater than 15 m²/g, greater than 20 m²/g, or greater than 30 m²/g. The LiFePO₄ particles can be stable in delithiated form even at elevated temperatures and in presence of oxidizable organic solvents. The particles can help provide a Li-ion battery having a high charge and discharge rate capability, the particles can also help provide a battery with a high cycle life.

In other embodiments, the cathode active material can include one or more lithium transition metal oxides such as LiCoO₂, LiNiO₂, or LiMn₂O₄. The cathode material includes, for example, at least about 85% by weight and/or up to about 92% by weight of cathode active material.

The conductive materials can enhance the electronic conductivity of cathode 16 within electrochemical cell 10. Examples of conductive materials include conductive aids and charge control agents. Specific examples of conductive materials include carbon black, graphitized carbon black, acetylene black, and carbon nanotubes. The cathode material includes, for example, at least about 1% by weight and up to about 5% by weight of one or more conductive materials.

The binders can help maintain homogeneity of the cathode material and can enhance the stability of the cathode. Examples of binders include linear di- and tri-block copolymers, such as polyvinylidene fluoride copolymerized with hexafluoroethylene,. Additional examples of binders include linear tri-block polymers cross-linked with melamine resin; ethylene-propylene copolymers; tetrafluoroethylene; chlorotrifluoroethylene; poly(vinyl fluoride); polytetraethylene; ethylene-tetrafluoroethylene copolymers; polybutadiene; cyanoethyl cellulose, carboxymethyl cellulose; polyacrylonitrile, ethylene propylene diene terpolymers, polyimides, styrene butadiene rubber, ethylene vinyl acetate copolymers; tri-block fluorinated thermoplastics; fluorinated polymers; hydrogenated nitrile rubber; fluoro-ethylene-vinyl ether copolymers; thermoplastic polyurethanes; thermoplastic olefins; styrene-ethylene-butylene-styrene block copolymers; polyvinylidene fluoride homopolymers; and blends thereof. The cathode material includes, for example, at least about 1% by weight and/or up to about 5 % by weight of one or more binders.

The cathode current collector can be formed, for example, of one or more metals and/or metal alloys. Examples of metals include titanium, nickel, and aluminum. Examples of metal alloys include aluminum alloys (e.g., 1N30, 1230) and stainless steel. The current collector generally can be in the form of a foil or a grid. The foil can have, for example, a thickness of at most 35 microns (e.g., at most 25 microns, at most 20 microns, at most 10 microns, at most 5 microns) and/or at least 5 microns (e.g., at least 10 microns, at least 20 microns, at least 25 microns).

Cathode 16 can be formed by first combining one or more cathode active materials, conductive materials, and binders with one or more solvents to form a slurry (e.g., by dispersing the cathode active materials, conductive materials, and/or binders in the solvents using a double planetary mixer), and then coating the slurry onto the current collector, for example, by extension die coating or roll coating. The coated current collector is then dried and calendered to provide the desired thickness and porosity.

Anode 12 includes a carbon-based material as the anode active material, such as graphite, spheroidal natural graphite, mesocarbon microbeads (MCMB), and carbon fibers (e.g., mesophase carbon fibers). The anode active material can have a small particle size. For example, the anode active material can be less than 25 µm, less than 15 µm, less than 10 µm, less than 5 µm. Anode 12 can include a conductive additive such as carbon such as carbon black, acetylene black, vapor grown fiber carbon, and carbon nanotubes, or a metallic phase. In some embodiments, anode active materials such as lithium titanate spinel material Li₄Ti₅O₁₂ can be used instead of or in addition to the carbon-based active materials. Conductive additives can occupy up to 25 % by weight of the total solid composition of an anode (e.g., an anode including lithium titanate spinel material). The anode includes, for example, at least about 70% by weight and up to about 100% by weight of anode active material.

Anode 12 can include one or more binders. Examples of binders include polyvinylidene fluoride (PVDF) and its copolymers with hexafluoroethylene, tetrafluoroethylene, chlorotrifluoroethylene, poly(vinyl fluoride), polytetraethylene, ethylene tetrafluoroethylene copolymers, polybutadiene, cyanoethyl cellulose, carboxymethyl cellulose, polyacrylonitrile, ethylene propylene diene terpolymers, styrene-butadiene rubbers, polyimides, ethylenevinyl acetate copolymer, polyethylene, polypropylene, styrene-butadiene rubbers, and blends thereof. The anode composition includes, for example, at least about 1% by weight and up to about 5% by weight of binder.

To form the anode, the anode active material and one or more binders can be mixed to form a paste which can be applied to a substrate (e.g., a current collector). The current substrate can be a copper foil or grid and have a thickness of at most 35 microns (e.g., at most 25 microns, at most 20 microns, at most 10 microns, at most 5 microns) and/or at least 5 microns (e.g., at least 10 microns, at least 20 microns, at least 25 microns). An adhesion promoter can be added to the paste before coating. The anode can have a thickness of less than or equal to 70 µm (e.g., less than or equal to 60 µm, less than or equal to 50 µm, less than or equal to 40 µm, less than or equal to 30 µm). The anode thickness can be reduced by using thin coatings of the anode material and/or by using a thin current collector. The amount of anode active material can be tailored to stoichiometrically match the cathode active materials, depending on the chemical reaction.

The negative lead 14 can be a tab and include copper, stainless steel, aluminum, an aluminum alloy, nickel, titanium, or steel. The negative lead can be connected to housing 22.

The electrolyte can be in liquid form. The electrolyte has a viscosity, for example, of at least about 0.2 centipoise (cps) (e.g., at least about 0.5 cps) and up to about 2.5 cps (e.g., up to about 2 cps or up to about 1.5 cps). As used herein, viscosity is measured as kinematic viscosity with a Ubbelohde calibrated viscometer tube (Cannon Instrument Company; Model C558) at 22°C.

The electrolyte can include one or more solvents such as cyclic carbonate esters such as ethylene carbonate, propylene carbonate, butylene carbonate, and fluorinated and/or chlorinated derivatives; acyclic dialkyl carbonate esters such as dimethyl carbonate, diethyl carbonate, ethylmethyl carbonate, dipropyl carbonate, methyl propyl carbonate, ethyl propyl carbonate, dibutyl carbonate, butylmethyl carbonate, butylethyl carbonate, butylpropyl carbonate; and solvents such as K-BL, dimethoxyethane, tetrahydrofuran, 2-methyl tetrahydrofuran, 1,3-dioxolane, 4-methyl-1,3-dioxolane, diethyl ether, sulfolane, methylsulfolane, 4-methyl-1,3-dioxolane, acetonitrile, propionitrile, ethyl acetate, methyl propionate, ethyl propionate, and mixtures thereof.

The electrolyte can include one or more salts. For example, lithium salts include lithium bis(trifluoromethanesulfonyl)imide (LiTFSI), lithium trifluoromethanesulfonate (LiTFS) and lithium iodide (LiI), LiClO₄, LiBF₄, LiN(SO₂CF₃)₂, LiNO₃, lithium hexafluorophosphate (LiPF₆), lithium bis(oxalate)borate (LiB(C₂O₄)₂), and lithium bis(perfluoroethyl)sulfonimide (LiN(SO₂C₂F₅)₂). Examples of other salts are described in Suzuki et al., U.S. Pat. 5,595,841 and in Totir et al., U.S. Pat. App. Pub. 2005/0202320 A1. The electrolyte includes, for example, at least about 0.1 M (e.g., at least about 0.5 M or at least about 0.7 M) and/or up to about 2 M (e.g., up to about 1.5 M or up to about 1.0 M) of the lithium salts.

In some embodiments, the electrolyte can be a solid or a gel. For example, the solid electrolyte can be Li₃N or LiI. As an example, the gel elelctrolyte can be poly(ethylene oxide), polymethacrylate ester compounds, or acrylate polymers. In some embodiments, gel electrolyte formulations can facilitate assembly of batteries (e.g., printable batteries).

Positive lead 18 can include aluminum, an aluminum alloy, titanium, and/or a titanium alloy. Positive lead 18 can be annular in shape, and can be arranged coaxially with the cylinder of a cylindrical cell. Positive lead 18 can also include radial extensions in the direction of cathode 16 that can engage the current collector. An extension can be round (e.g., circular or oval), rectangular, triangular or another shape. Positive lead 18 can include extensions having different shapes. Positive lead 18 and the current collector are in electrical contact. Electrical contact between positive lead 18 and the current collector can be achieved by mechanical contact. In some embodiments, positive lead 18 and the current collector can be welded together.

Separator 20 can be formed of any of the standard separator materials used in electrochemical cells. For example, separator 20 can be formed of polypropylene (e.g., nonwoven polypropylene, microporous polypropylene), polyethylene, and/or a polysulfone. The separator material can be made of 20 -25 micron thick non woven micro porous tri-layer polyolefin films such as Celgard 2300. In some embodiments, it is possible to utilize thinner separators (e.g., about 10 microns thick, about 15 microns thick) than Celgard 2300 to further increase charge capability of the battery. Separators are described, for example, in Blasi et al., U.S. Patent No. 5,176,968. The separator may also be, for example, a porous insulating polymer composite layer (e.g., polystyrene rubber and finely divided silica).

Housing 22 can be made of, for example, one or more metals (e.g., aluminum, aluminum alloys, nickel, nickel plated steel, stainless steel) and/or plastics (e.g., polyvinyl chloride, polypropylene, polysulfone, ABS, polyamide). The housing can be cylindrical, and have a diameter and a height. The diameter can be greater than or equal to 5 mm (e.g., greater than or equal to 10 mm, greater than or equal to 15 mm, or greater than or equal to 17 mm) and/or less than or equal to 18 mm (e.g., less than or equal to 17 mm, less than or equal to 15 mm, or less than or equal to 10 mm). The height can be greater than or equal to 20 mm (e.g., greater than or equal to 30 mm, greater than or equal to 40 mm, greater than or equal to 50 mm) and/or less than equal to 65 mm (e.g., less than or equal to 50 mm, less than or equal to 40 mm, or less than or equal to 30 mm). In some embodiments, the housing can be prismatic and have a thickness of 3.5mm to 15mm, a width of 20mm to 60mm, and a height of 20mm to 65mm.

Cap 24 can be made of, for example, aluminum, nickel, titanium, steel, or nickel-plated steel. In some embodiments, the top assembly of the battery uses aluminum or a material comprising aluminum to reduce internal resistance of the battery so that the charge current can be increased.

Batteries and battery materials, such as cathode materials, anode materials, separator materials, and electrolyte materials are further described, for example, in USSN 11/396,515, filed April 3, 2006; USSN 11/159,989, filed June 23, 2005; USSN 11/111,102, filed April 20, 2005; USSN 11/117,157, filed April 28, 2005; USSN 11/076,556, filed March 9, 2005; USSN 11/052,971, filed February 7, 2005; USSN 10/876,179, filed June 23, 2004; USSN 10/628,681, filed July 28, 2003; USSN 10/354,673, filed January 30, 2003; USSN 10/329,046, filed December 23, 2002; USSN 10/206,662, filed July 26, 2002; International Publication Nos. WO2006/113924, WO2004/059758; and U.S. Patent 7,087,348,.

To assemble the cell, separator 20 can be cut into pieces of a similar size as anode 12 and cathode 16 and placed therebetween. Cathode 16, separator 20, anode 12, and another separator 20 are superimposed on one another and wound around a mandrel. The mandrel can have a small diameter, which can help decrease free volume within a battery and can increase the capacity of the battery. In some embodiments, the mandrel has a diameter of less than or equal to 3 mm (e.g., less than 2.5 mm, less than or equal to 2 mm, less than or equal to 1 mm) and/or greater than or equal to 0.5 mm (e.g., greater than or equal to 1 mm, greater than or equal to 2 mm, greater than 2.5 mm). The mandrel diameter depends on the material from which the mandrel is made, and on the size of the cathode, separator, and the anode sheets. For example, a mandrel made from a relatively strong material (e.g., hardened tool steels such as D2, M2, M7, and/or S7; tungsten high speed steel, high strength titanium alloys such as 6A1-4V) can have a smaller diameter than a mandrel made from a more flexible and breakable material. A mandrel can have a smaller diameter when used for winding electrode and/or separator sheets that are thinner, have a smaller area, and/or are lighter in mass. In some embodiments, the mandrel can have a length of greater than equal to 30 mm (e.g., greater than or equal to 40 mm, greater than or equal to 50 mm, greater than equal to 60 mm, greater than or equal to 70 mm) and/or less than or equal to 75 mm (e.g., less than or equal 70 mm, less than or equal to 60 mm, less than or equal to 50 mm, less than or equal to 40 mm). In some embodiments, the mandrel length is from 45 to 65 mm in length (e.g., from 45-50 mm length, from 50 to 65 mm in length) and/or from 1.5 mm to 2.5 mm in diameter. In some embodiments, the mandrel is made of tools steel M7.

In some embodiments, cathode 16, separator 20, anode 12, and another separator 20 are superimposed on one another and wound around a blade. The blade can be thin, which can help decrease free volume within a battery and can increase the capacity of the battery. In some embodiments, the blade has a thickness of less than or equal to 1.0 mm (e.g., less than or equal to 0.8 mm, less than or equal to 0.7 mm, less than or equal to 0.5 mm, less than or equal to 0.3 mm, less than or equal to 0.1 mm) and/or greater than or equal to 0.1 mm (e.g., greater than or equal to 0.3 mm, greater than or equal to 0.5 mm, greater than or equal to 0.7 mm, less than or equal to 0.9 mm). In some embodiments, the blade has a width of greater than or equal to 20 mm (e.g., greater than or equal to 25 mm, greater than or equal to 30 mm, greater than 35 mm) and/or less than or equal to 40 mm (e.g., less than or equal to 35 mm, less than or equal to 30 mm, less than or equal to 25 mm). In some embodiments, the blade has a length of greater than or equal to 20 mm (e.g., greater than or equal to 40 mm, or greater than or equal to 60 mm) and/or less than or equal to 80 mm (e.g., less than or equal to 60 mm, or less than or equal to 40 mm). As an example, the blade can have a dimension of 29 mm wide by 0.9 mm thick by 75 mm long. The blade can be made of a strong material, for example, tool steel D2.

The wound anode 12, separator 20, and cathode 16 are placed within housing 22, which is then filled with the electrolytic solution and sealed. One end of housing 22 is closed with cap 24 and annular insulating gasket 26, which can provide a gas-tight and fluid-tight seal. Positive lead 18 connects cathode 16 to cap 24. Safety valve 28 is disposed in the inner side of cap 24 and is configured to decrease the pressure within electrochemical cell 10 when the pressure exceeds some predetermined value. Safety valve 28 can include a vent. In some embodiments, the top assembly of the battery is sealed by crimping into the battery housing. Methods for assembling an electrochemical cell are described, for example, in Moses, U.S. Pat. 4,279,972, Moses et al., U.S. Pat. 4,401,735, and Kearney et al., U.S. Pat. 4,526,846.

During charging, one or more pulses of charging current are applied over short periods of time such as (e.g., a 10 second charge, a 20 second charge, a 30 second charge, e.g., up to a minute and so forth). The increase of the effective active electrode area for both the anode and the cathode can allow for decreased internal resistance of the battery, such that the current can be increased during charging.

The following examples are meant to be illustrative and not to be limiting.

### Example 1

Batteries were assembled using the following components:
Anode: coated and calendared MCMB material on two sides 10 or 15 micron copper foil.
   Anode tab: copper alloy 110, 3.5mm x 6mm x 0.1mm
   Total anode thickness: 48 microns
   Anode length: 389mm
   Anode width: 22 mm
Cathode: coated and calendared LiFePO₄ material on two sides of 15 micron aluminum foil.
   Cathode tab: Aluminum alloy 1100, 3mm x 15mm x 0.12mm
   Total cathode thickness: 90 microns
   Cathode length: 360mm
   Cathode width: 21mm
Separator thickness: 20 microns (Celgard 2300)
Bottom insulator: Kapton disc, 0.25mm x 9mm diameter
Top insulator: Kapton washer: 0.125mm x 9mm diameter, 5mm diameter ID
Top assembly components: internal aluminum tab (5 mm x 5mm x 0.25mm) polypropylene plastic seal, aluminum 1100 rivet (1/16" diameter), steel support ring, stainless steel washer, external copper tab
Electrolyte weight: 0.96-1.0 grams

The cathode, separator, anode, and a second layer of separator were superimposed on one another in succession and wound around a 1.5 mm mandrel. The wound electrodes and separator were then removed from the mandrel and inserted into a housing having a nickel-plated steel 0.20 mm thick and a nickel plating of 2-3 microns.

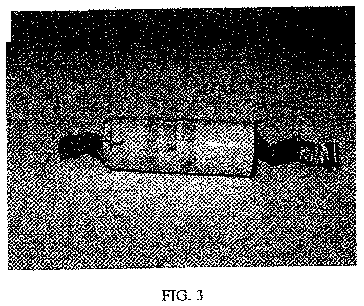

The electrolyte was added to the 2/3 AAA cells. About 1 gram of electrolyte was placed in each cell. The cells were then crimped, pre-discharged and the open circuit voltage and load voltage determined. FIG. 3 shows a lithium secondary 2/3 AAA battery with copper tabs. The batteries have a capacity of 95 mA and an internal resistance in the range from 50 to 70 mOhms when measured at 1KHz.

### Example 2

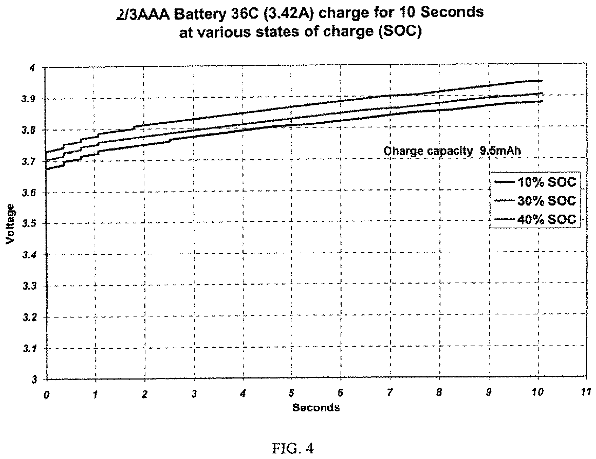

A 2/3 AAA battery of Example 1 was charged at 36C (3.42A) for 10 seconds at 10%, 30%, and 40% state of charge. Referring to FIG. 4, the battery received a charge capacity of 9.5 mAh, which corresponded to 10% of the battery capacity at all the tested charge states.

### Example 3

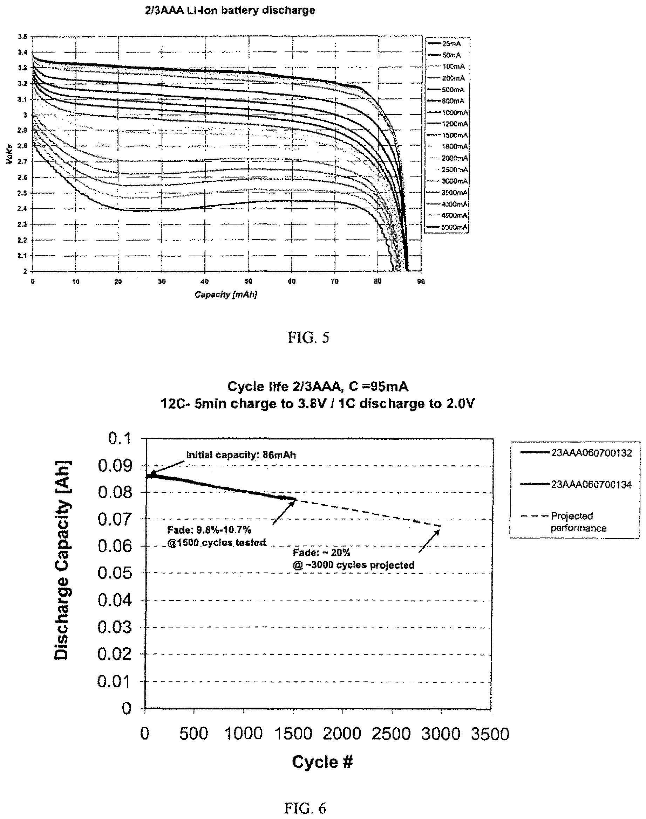

A 2/3 AAA battery of Example 1 was discharged at rates of from 25mA to 5000 mA. The battery showed similar capacity ranges of about 83-88% at the different discharge rates. FIG. 5 shows the discharge capability of a 2/3 AAA battery.

### Example 4

A 2/3 AAA battery of Example 1 was subjected to a 12C (5 minutes) charge to 3.8V, followed by a 1C discharge to 2.0V. The charge-discharge cycle was repeated for 1500 cycles. Referring to FIG. 6, the battery capacity decreased by 9.8%-10.7% after 1500 cycles. A decrease of about 20% at 3000 cycles was extrapolated from the data.

### Example 5

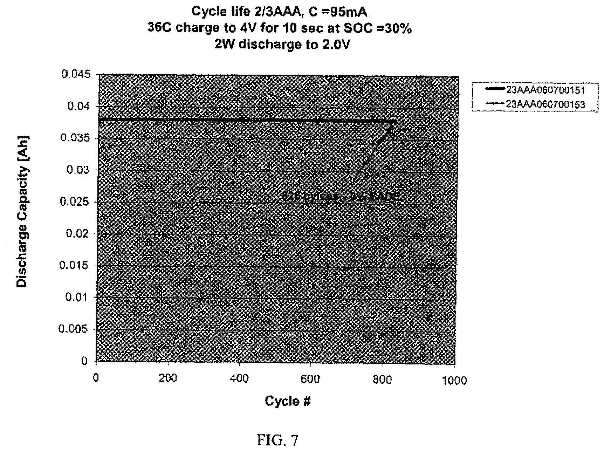

A 2/3 AAA battery of Example 1 at a 30% state of charge was subjected to a 36C (3.42A) charge to 4V for 10 seconds followed by a 2W discharge to 2.0V. Referring to FIG. 7, the battery capacity did not decrease (0% fade) after 826 cycles.

### Other Embodiments

While electrochemical cell 10 is a secondary cell, in some embodiments a primary cell can have a cathode that includes the above-described cathode active material. Primary electrochemical cells are meant to be discharged (e.g., to exhaustion) only once, and then discarded. Primary cells are not intended to be recharged. Primary cells are described, for example, in David Linden, Handbook of Batteries (McGraw-Hill, 2d ed. 1995). Secondary electrochemical cells can be recharged for many times (e.g., more than fifty times, more than a hundred times, or more). In some cases, secondary cells can include relatively robust separators, such as those having many layers and/or that are relatively thick. Secondary cells can also be designed to accommodate for changes, such as swelling, that can occur in the cells. Secondary cells are described, for example, in Falk & Salkind, "Alkaline Storage Batteries", John Wiley & Sons, Inc. 1969; DeVirloy et al., U.S. Pat. 345,124, and French Patent No. 164,681.

Other configurations of an electrochemical cell can also be used, including, for example, a button or coin cell configuration, a prismatic cell configuration, a rigid laminar cell configuration, and a flexible pouch, envelope or bag cell configuration. Furthermore, an electrochemical cell can have any of a number of different voltages (e.g., 1.5 V, 3.0 V, 4.0 V). Electrochemical cells having other configurations are described, for example, in Berkowitz et al., U.S.S.N. 10/675,512, U.S. Pat. App. Pub. 2005/0112467 A1, and Totir et al., U.S. Pat. App. Pub. 2005/0202320 A1. In some embodiments, a cylindrical, a prismatic, button, or a coin cell battery can be assembled by folding, or by stacking the electrodes and the separator.

Other embodiments are in the claims.

## Claims

1. A secondary lithium battery, comprising:
a housing having a volume of less than or equal to 10 ml, the housing comprising therein
a cathode comprising a current collector coated with a cathode composition comprising active material, the active material comprising LiFePO4, the active material comprising particles or particulates having a specific area of greater than 10m2/g, the coated current collector having a thickness of between 15 µm and 120 µm;
an anode; and
a separator between the anode and the cathode;
wherein the battery has a charge acceptance rate of 10 percent capacity in 15 seconds or less.

2. The battery of claim 1, wherein the coated current collector is spirally wound, stacked or folded.

3. The battery of claim 1, wherein the battery has a charge acceptance rate of about 10 percent capacity in about 10 seconds or less.

4. The battery of claim 1, wherein the battery has a continuous discharge power density of greater than or equal to 1000 watts per liter.

5. The battery of claim 1, wherein the battery has a charge power density greater than or equal to 0.13% capacity/sec/ml.

## Patentansprüche

1. Lithium-Sekundärbatterie, umfassend:
ein Gehäuse, das ein Volumen von weniger als oder gleich 10 ml aufweist, das Gehäuse darin umfassend:
eine Kathode, die einen Stromabnehmer umfasst, der mit einer Kathodenzusammensetzung beschichtet ist, die aktives Material umfasst, wobei das aktive Material LiFePO4 umfasst, das aktive Material Partikel oder Teilchen umfasst, die einen spezifischen Bereich von größer als 10 m²/g aufweisen, der beschichtete Stromabnehmer eine Stärke zwischen 15 µm und 120 µm aufweist;
eine Anode; und
ein Trennelement zwischen der Anode und der Kathode;
wobei die Batterie eine Ladungsaufnahmegeschwindigkeit von 10 Prozent Kapazität in 15 Sekunden oder weniger aufweist.

2. Batterie nach Anspruch 1, wobei der beschichtete Stromabnehmer spiralförmig gewunden, gestapelt oder gefaltet ist.

3. Batterie nach Anspruch 1, wobei die Batterie eine Ladungsaufnahmegeschwindigkeit von etwa 10 Prozent Kapazität in etwa 10 Sekunden oder weniger aufweist.

4. Batterie nach Anspruch 1, wobei die Batterie eine kontinuierliche Entladungsleistungsdichte von größer als oder gleich 1000 Watt pro Liter aufweist.

5. Batterie nach Anspruch 1, wobei die Batterie eine kontinuierliche Ladungsleistungsdichte von größer als oder gleich 0,13 % Kapazität/Sek./ml aufweist.

## Revendications

1. Batterie secondaire au lithium, comprenant :
un logement ayant un volume inférieur ou égal à 10 ml, le logement comprenant à l'intérieur de celui-ci
une cathode comprenant un collecteur de courant revêtu d'une composition de cathode comprenant un matériau actif, le matériau actif comprenant LiFePO4, le matériau actif comprenant des particules ou des matières particulaires ayant une aire spécifique supérieure à 10 le collecteur de courant revêtu ayant une épaisseur comprise entre 15 µm et 120 µm ;
une anode ; et
un séparateur entre l'anode et la cathode ;
la batterie ayant un taux d'acceptation de charge de 10 pour cent de capacité en 15 secondes ou moins.

2. Batterie selon la revendication 1, dans laquelle le collecteur de courant revêtu est enroulé en spirale, empilé ou plié.

3. Batterie selon la revendication 1, dans laquelle la batterie a un taux d'acceptation de charge d'environ 10 pour cent de capacité en environ 10 secondes ou moins.

4. Batterie selon la revendication 1, dans laquelle la batterie a une densité de puissance de décharge continue supérieure ou égale à 1000 watts par litre.

5. Batterie selon la revendication 1, dans laquelle la batterie a une densité de puissance de charge supérieure ou égale à 0,13 % de capacité/s/ml.
